# EUROPEAN PATENT APPLICATION

(11) **EP 4 561 173 A1**
(43) Date of publication of application: **28.05.2025**
(21) Application number: 23849321.7
(22) Date of filing: 31.07.2023
(51) Int. Cl.: H04W 36/00, H04B 7/185

(54) **COMMUNICATION METHOD AND APPARATUS**

(30) Priority: 01.08.2022 CN 202210915959; 08.08.2022 CN 202210946157
(71) Applicant: Huawei Technologies Co., Ltd., Shenzhen, Guangdong 518129 (CN)
(72) Inventor: FAN, Liangliang, Shenzhen, Guangdong 518129 (CN); XU, Haibo, Shenzhen, Guangdong 518129 (CN); XUE, Lixia, Shenzhen, Guangdong 518129 (CN)
(74) Representative: Körber, Martin Hans
(86) International application number: PCT/CN2023/110085
(87) International publication number: WO 2024/027613

(57) **Abstract**

Embodiments of this application provide a communication method and apparatus. The communication method includes: A terminal device receives first information from a first network device, where the first information includes information about a moving cell in which the terminal device is located, the moving cell is a cell covered in a movement process of a second network device, and the second network device communicates with the first network device over a non-terrestrial network NTN; and the terminal device determines, based on the first information, whether to perform neighboring cell measurement, where a neighboring cell is a neighboring cell of the moving cell. Therefore, the terminal device in the moving cell scenario may determine, in a timely manner based on the information that is sent by the first network device and that includes the information about the moving cell in which the terminal device is located, whether neighboring cell measurement and cell selection or reselection need to be performed, so that the terminal device can obtain paging of a wireless network in a timely manner and initiate a call in a timely manner.

## Description

This application claims priority to Chinese Patent Application No. 202210915959.2, filed with the China National Intellectual Property Administration on August 1, 2022 and entitled "COMMUNICATION METHOD AND APPARATUS", which is incorporated herein by reference in its entirety.

This application claims priority to Chinese Patent Application No. 202210946157.8, filed with the China National Intellectual Property Administration on August 8, 2022 and entitled "COMMUNICATION METHOD AND APPARATUS", which is incorporated herein by reference in its entirety.

### TECHNICAL FIELD

Embodiments of this application relate to the field of wireless communication technologies, and more specifically, to a communication method and apparatus.

### BACKGROUND

A satellite network is a hot topic of research in the world today, and a satellite communication technology is increasingly developed. For example, a non-terrestrial network (non-terrestrial networks, NTN) is a network or a network segment that uses a radio frequency on a satellite for communication, to provide a wider coverage area. However, if an orbit of a satellite is higher, a coverage area of the satellite is larger, and a communication delay is higher.

For non-geosynchronous orbit (non-geosynchronous orbit, NGSO) satellites including low Earth orbit satellites and medium Earth orbit satellites, a base station may provide quasi-Earth-fixed cell (quasi-Earth-fixed cell) coverage or Earth-moving cell (earth-moving cell) coverage. A quasi-fixed cell is a geographical area covered by a steerable beam generated by the satellite, and a moving cell is a geographical area covered by a fixed or non-steerable beam generated by the satellite in a satellite movement process.

To obtain uninterruptible services of a wireless network, a terminal device needs to perform reselection and handover between cells having different coverage areas. Generally, when the terminal device is in an idle (idle) state or an inactive (inactive) state, the terminal device determines, based on signal quality of a current cell and system information of a network device, whether signal quality of a neighboring cell meets a cell reselection condition, to determine whether to perform neighboring cell measurement and reselection.

However, a near-far effect of the NTN cell is not obvious. In other words, a signal difference between a cell center and a cell edge is small. Therefore, a threshold for performing neighboring cell measurement is difficult to be configured, and it is difficult for the terminal device to identify the cell edge based on cell signal strength and perform cell reselection when the cell edge is reached. As a result, neighboring cell measurement cannot be performed in a timely manner. This may cause a case in which the terminal device does not reside in any cell, paging is missed, and a call initiated by the terminal device is delayed.

Therefore, for the terminal device in a moving cell scenario, how to perform neighboring cell measurement in a timely manner is a problem that urgently needs to be resolved.

### SUMMARY

Embodiments of this application provide a communication method. A terminal device in a moving cell scenario may determine, in a timely manner based on information that is sent by a first network device and that includes information about a moving cell in which the terminal device is located, whether neighboring cell measurement needs to be performed, so that the terminal device can obtain continuous services of a wireless network.

According to a first aspect, a communication method is provided. The method may be performed by a terminal device, or may be performed by a component (for example, a chip or a circuit) of a terminal device. This is not limited. For ease of description, the following uses an example in which the method is performed by the terminal device for description.

The method may include: The terminal device receives first information from a first network device, where the first information includes information about a moving cell in which the terminal device is located, the moving cell is a cell covered in a movement process of a second network device, and the second network device communicates with the first network device over a non-terrestrial network NTN; and the terminal device determines, based on the first information, whether to perform neighboring cell measurement, where a neighboring cell is a neighboring cell of the moving cell.

Based on the foregoing solution, the terminal device in a moving cell scenario may determine, in a timely manner based on the information that is sent by the first network device and that is about the moving cell in which the terminal device is located, whether neighboring cell measurement and cell selection or reselection need to be performed, so that the terminal device can obtain paging of a wireless network in a timely manner and initiate a call in a timely manner.

With reference to the first aspect, in some implementations of the first aspect, the first information includes timestamp information and/or a first distance. The timestamp information indicates time information of a reference point of the moving cell. The reference point of the moving cell is a location in the moving cell. The first distance is used to determine a relationship between a location of the terminal device and a coverage area of the moving cell.

Based on the foregoing solution, the first information sent by the first network device includes the timestamp information indicating the time information of the reference point of the moving cell and the first distance used to determine the relationship between the location of the terminal device and the coverage area of the moving cell, so that the terminal device can determine, based on the foregoing information, whether neighboring cell measurement needs to be performed.

Optionally, the timestamp information may further indicate that the cell in which the terminal device is located is a moving cell. This increases flexibility of a solution in which the terminal device determines whether the terminal device is in a moving cell.

With reference to the first aspect, in some implementations of the first aspect, the timestamp information indicates a start moment of the reference point of the moving cell, and the first information further includes at least one of the following:
first indication information, the reference point of the moving cell, a validity period of the reference point of the moving cell, and a location relationship between the moving cell and the second network device. The first indication information indicates that the cell in which the terminal device is located is the moving cell. The validity period of the reference point of the moving cell indicates a time range in which the reference point is available for the terminal device from the start moment. The location relationship between the moving cell and the second network device is used to determine a location of the reference point of the moving cell.

Based on the foregoing solution, the first information sent by the first network device further includes other information used by the terminal device to determine whether neighboring cell measurement needs to be performed. This improves flexibility and accuracy of a solution in which the terminal device determines whether neighboring cell measurement needs to be performed.

Optionally, the location relationship between the moving cell and the second network device may further indicate that the cell in which the terminal device is located is a moving cell. This increases flexibility of a solution in which the terminal device determines whether the terminal device is in a moving cell.

With reference to the first aspect, in some implementations of the first aspect, the timestamp information is any one of the following: an absolute moment of the reference point of the moving cell, an offset value of a start moment of ephemeris information of the second network device, and a start moment of a downlink subframe corresponding to a system frame number and a subframe number in the first information. The ephemeris information of the second network device indicates location information of the second network device.

Based on the foregoing solution, the timestamp information may be the plurality of types of time information indicating the reference point of the moving cell. This increases flexibility of the solution.

With reference to the first aspect, in some implementations of the first aspect, the reference point of the moving cell is a central location of the moving cell at a moment.

Based on the foregoing solution, the reference point of the moving cell may be the central location of the moving cell at the moment, so that the terminal device performs neighboring cell measurement in a timelier manner based on the central location of the moving cell.

With reference to the first aspect, in some implementations of the first aspect, the location relationship between the moving cell and the second network device includes a distance relationship between the reference point of the moving cell and a sub-satellite point of the second network device and an angle relationship between the reference point of the moving cell and the sub-satellite point of the second network device; or the location relationship between the moving cell and the second network device includes an angle relationship between the reference point of the moving cell and the second network device and an angle relationship between an origin of coordinates and the reference point of the moving cell.

Based on the foregoing solution, the location relationship between the moving cell and the second network device may be represented by using a plurality of angle relationships and distance relationships. This increases flexibility of a manner of representing the location relationship between the moving cell and the second network device.

With reference to the first aspect, in some implementations of the first aspect, that the terminal device determines, based on the first information, whether to perform neighboring cell measurement includes: The terminal device determines, based on the first information, that the cell in which the terminal device is located is the moving cell; the terminal device determines a second distance; and when the first information includes the first distance, the terminal device determines, based on the first distance and the second distance, whether to perform neighboring cell measurement. The second distance is a distance between a first location and a second location. The first location is a location of the terminal device at a first moment. The second location is a location of the reference point of the moving cell at the first moment.

Based on the foregoing solution, after determining that the cell in which the terminal device is located is the moving cell, the terminal device further determines, based on the location relationship between the location of the terminal device and the location of the reference point of the moving cell, whether to perform neighboring cell measurement. This increases diversity of solutions for determining whether to perform neighboring cell measurement.

With reference to the first aspect, in some implementations of the first aspect, that the terminal device determines a second distance includes: The terminal device determines the first location; the terminal device determines a third location based on the ephemeris information of the second network device, where the third location is a location of the second network device at the first moment; the terminal device determines the second location based on the third location; and the terminal device determines the second distance based on the first location and the second location.

With reference to the first aspect, in some implementations of the first aspect, that the terminal device determines the second location based on the third location includes: When the first information includes the location relationship between the moving cell and the second network device, the terminal device determines the second location based on the third location and the location relationship between the moving cell and the second network device; or when the first information includes the timestamp information, and the first information does not include the location relationship between the moving cell and the second network device, the terminal device determines the location relationship between the moving cell and the second network device based on the timestamp information, a location of the second network device at a current moment, and a location of the reference point of the moving cell at the current moment; and the terminal device determines the second location based on the third location and the location relationship between the moving cell and the second network device.

With reference to the first aspect, in some implementations of the first aspect, when the first information includes the first distance, that the terminal device determines, based on the first distance and the second distance, whether to perform neighboring cell measurement includes: The terminal device determines a service stop moment of the moving cell based on the first distance and the second distance; and the terminal device performs neighboring cell measurement before the service stop moment of the moving cell.

Based on the foregoing solution, the terminal device may determine the service stop moment of the moving cell based on the location relationship between the location of the terminal device and the location of the reference point of the moving cell and the first distance, to determine, based on the service stop moment of the moving cell, when to perform neighboring cell measurement. This increases the diversity of the solutions for determining whether to perform neighboring cell measurement.

With reference to the first aspect, in some implementations of the first aspect, that the terminal device determines a service stop moment of the moving cell based on the first distance and the second distance includes: When the second distance is greater than the first distance, the terminal device determines that the first moment is the service stop moment of the moving cell.

With reference to the first aspect, in some implementations of the first aspect, when the second distance is less than the first distance, the method further includes: The terminal device determines a third distance, where the third distance is a distance between a fourth location and a fifth location, the fourth location is a location of the terminal device at a second moment, the fifth location is a location of the reference point of the moving cell at the second moment, and the first moment is before the second moment; and when the third distance is greater than the first distance, the terminal device determines that the second moment is the service stop moment of the moving cell.

Based on the foregoing solution, when the second distance between the location of the terminal device and the location of the reference point of the moving cell at the first moment is less than the first distance, the terminal device further determines the third distance between the location of the terminal device and the location of the reference point of the moving cell at the second moment, and determines the service stop moment of the moving cell based on the third distance and the second distance. This increases flexibility of a solution for determining the service stop moment of the moving cell.

With reference to the first aspect, in some implementations of the first aspect, when the first information includes the first distance, that the terminal device determines, based on the first distance and the second distance, whether to perform neighboring cell measurement includes: The terminal device determines, based on the first distance and the second distance, whether the terminal device is located at an edge of the moving cell; and when the terminal device is located at the edge of the moving cell, the terminal device performs neighboring cell measurement.

Based on the foregoing solution, the terminal device determines whether to perform neighboring cell measurement by determining whether the terminal device is at the edge of a moving cell. This increases flexibility of the solution of determining whether to perform neighboring cell measurement.

With reference to the first aspect, in some implementations of the first aspect, that the terminal device determines, based on the first distance and the second distance, whether the terminal device is located at an edge of the moving cell includes: When the second distance is greater than the first distance, the terminal device determines that the terminal device is located at the edge of the moving cell at the first moment.

With reference to the first aspect, in some implementations of the first aspect, that the terminal device determines, based on the first distance and the second distance, whether the terminal device is located at an edge of the moving cell includes: When the second distance is less than the first distance, the terminal device skips performing neighboring cell measurement at the first moment; the terminal device determines a third distance, where the third distance is a distance between a fourth location and a fifth location, the fourth location is a location of the terminal device at a second moment, the fifth location is a location of the reference point of the moving cell at the second moment, and the first moment is before the second moment; and when the third distance is greater than the first distance, the terminal device determines that the terminal device is located at the edge of the moving cell at the second moment.

Based on the foregoing solution, when the terminal device is located at the edge of the moving cell at the first moment, the terminal device further determines whether the terminal device is located at the edge of the moving cell at the second moment. This increases flexibility of the solution of determining whether the terminal device is located at the edge of the moving cell.

With reference to the first aspect, in some implementations of the first aspect, that the terminal device determines a third distance includes: The terminal device determines the fourth location; the terminal device determines a sixth location based on the ephemeris information of the second network device, where the sixth location is a location of the second network device at the second moment; the terminal device determines the fifth location based on the sixth location; and; the terminal device determines the third distance based on the fourth location and the fifth location.

With reference to the first aspect, in some implementations of the first aspect, that the terminal device determines the fifth location based on the sixth location includes: When the first information includes the location relationship between the moving cell and the second network device, the terminal device determines the fifth location based on the sixth location and the location relationship between the moving cell and the second network device; or when the first information includes the timestamp information, and the first information does not include the location relationship between the moving cell and the second network device, the terminal device determines the location relationship between the moving cell and the second network device based on a location of the second network device at a current moment, the timestamp information, and the location of the reference point of the moving cell; and the terminal device determines the fifth location based on the sixth location and the location relationship between the moving cell and the second network device.

With reference to the first aspect, in some implementations of the first aspect, that the terminal device determines, based on the first information, that the cell in which the terminal device is located is the moving cell includes: When the first information includes the timestamp information, the terminal device determines, based on the timestamp information, that the cell in which the terminal device is located is the moving cell; or when the first information includes the first indication information, the terminal device determines, based on the first indication information, that the cell in which the terminal device is located is the moving cell; or when the first information includes the location relationship between the moving cell and the second network device, the terminal device determines, based on the location relationship between the moving cell and the second network device, that the cell in which the terminal device is located is the moving cell.

Based on the foregoing solution, the terminal device may determine, based on a plurality of types of information in the first information, that the terminal device is located in the moving cell. This increases flexibility of a solution in which the terminal device determines that the cell in which the terminal device is located is the moving cell.

With reference to the first aspect, in some implementations of the first aspect, the method further includes: The terminal device obtains updated ephemeris information of the second network device before the ephemeris information of the second network device expires; and the terminal device re-determines the second distance.

Based on the foregoing solution, the terminal device needs to update the ephemeris information of the second network device in a timely manner, to ensure that the terminal device can determine, in a timely manner, whether to perform neighboring cell measurement.

With reference to the first aspect, in some implementations of the first aspect, the method further includes: The terminal device determines the validity period of the reference point of the moving cell; and the terminal device updates the reference point of the moving cell before the validity period of the reference point of the moving cell expires.

Based on the foregoing solution, the terminal device needs to update the reference point of the moving cell in a timely manner, to ensure that the terminal device can determine, in a timely manner, whether to perform neighboring cell measurement.

With reference to the first aspect, in some implementations of the first aspect, that the terminal device determines the validity period of the reference point of the moving cell includes: When the first information includes the validity period of the reference point of the moving cell, the terminal device determines the validity period of the reference point of the moving cell; or when the first information does not include the validity period of the reference point of the moving cell, the terminal device determines the validity period of the reference point of the moving cell based on a validity period of the ephemeris information of the second network device; or when the first information does not include the validity period of the reference point of the moving cell, the terminal device determines a period when the terminal device is in the moving cell as the validity period of the reference point of the moving cell.

Based on the foregoing solution, the terminal device may determine the validity period of the reference point of the moving cell based on a plurality of types of information in the first information. This increases flexibility of a solution in which the terminal device determines the validity period of the reference point of the moving cell.

According to a second aspect, a communication method is provided. The method may be performed by a first network device, or may be performed by a component (for example, a chip or a circuit) of a first network device. This is not limited. For ease of description, the following uses an example in which the method is performed by the first network device for description.

The method may include: The first network device determines first information, where the first information includes information about a moving cell in which a terminal device is located, the moving cell is a cell covered in a movement process of a second network device, and the second network device communicates with the first network device over a non-terrestrial network NTN; and the first network device sends the first information to the terminal device.

Based on the foregoing solution, the first network device may send, to the terminal device in a moving cell scenario, the information about the moving cell in which the terminal device is located, so that the terminal device can determine, in a timely manner, whether neighboring cell measurement and cell selection or reselection need to be performed, to obtain paging of a wireless network in a timely manner and initiate a call in a timely manner.

With reference to the second aspect, in some implementations of the second aspect, the first information includes timestamp information and/or a first distance. The timestamp information indicates time information of a reference point of the moving cell. The reference point of the moving cell is a location in the moving cell. The first distance is used to determine a relationship between a location of the terminal device and a coverage area of the moving cell.

Based on the foregoing solution, the first information sent by the first network device includes the timestamp information indicating the time information of the reference point of the moving cell and the first distance used to determine the relationship between the location of the terminal device and the coverage area of the moving cell, so that the terminal device can determine, based on the foregoing information, whether neighboring cell measurement needs to be performed.

Optionally, the timestamp information may further indicate that the cell in which the terminal device is located is a moving cell. This increases flexibility of a solution in which the terminal device determines whether the terminal device is in a moving cell.

With reference to the second aspect, in some implementations of the second aspect, the timestamp information indicates a start moment of the reference point of the moving cell, and the first information further includes at least one of the following:
first indication information, the reference point of the moving cell, a validity period of the reference point of the moving cell, and a location relationship between the moving cell and the second network device. The first indication information indicates that the cell in which the terminal device is located is the moving cell. The validity period of the reference point of the moving cell indicates a time range in which the reference point is available for the terminal device from the start moment. The location relationship between the moving cell and the second network device is used to determine a location of the reference point of the moving cell.

Based on the foregoing solution, the first information sent by the first network device further includes other information used by the terminal device to determine whether neighboring cell measurement needs to be performed. This improves flexibility and accuracy of a solution in which the terminal device determines whether neighboring cell measurement needs to be performed.

Optionally, the location relationship between the moving cell and the second network device may further indicate that the cell in which the terminal device is located is a moving cell. This increases flexibility of a solution in which the terminal device determines whether the terminal device is in a moving cell.

With reference to the second aspect, in some implementations of the second aspect, the timestamp information is any one of the following: an absolute moment of the reference point of the moving cell, an offset value of a start moment of ephemeris information of the second network device, and a start moment of a downlink subframe corresponding to a system frame number and a subframe number in the first information. The ephemeris information of the second network device indicates location information of the second network device.

Based on the foregoing solution, the timestamp information may be the plurality of types of time information indicating the reference point of the moving cell. This increases flexibility of the solution.

With reference to the second aspect, in some implementations of the second aspect, the reference point of the moving cell is a central location of the moving cell at a moment.

Based on the foregoing solution, the reference point of the moving cell may be the central location of the moving cell at the moment, so that the terminal device performs neighboring cell measurement in a timelier manner based on the central location of the moving cell.

With reference to the second aspect, in some implementations of the second aspect, the location relationship between the moving cell and the second network device includes a distance relationship between the reference point of the moving cell and a sub-satellite point of the second network device and an angle relationship between the reference point of the moving cell and the sub-satellite point of the second network device; or the location relationship between the moving cell and the second network device includes an angle relationship between the reference point of the moving cell and the second network device and an angle relationship between an origin of coordinates and the reference point of the moving cell.

Based on the foregoing solution, the location relationship between the moving cell and the second network device may be represented by using a plurality of angle relationships and distance relationships. This increases flexibility of a manner of representing the location relationship between the moving cell and the second network device.

According to a third aspect, a communication apparatus is provided, including a unit configured to perform the method according to the first aspect. The communication apparatus may be a terminal device, or may be implemented by a chip or a circuit disposed in a terminal device. This is not limited in this application.

The communication apparatus includes:
a transceiver unit, configured to receive first information from a first network device, where the first information includes information about a moving cell in which the terminal device is located, the moving cell is a cell covered in a movement process of a second network device, and the second network device communicates with the first network device over a non-terrestrial network NTN; and a processing unit, configured to determine, based on the first information, whether to perform neighboring cell measurement, where a neighboring cell is a neighboring cell of the moving cell.

With reference to the third aspect, in some implementations of the third aspect, the first information includes timestamp information and/or a first distance. The timestamp information indicates time information of a reference point of the moving cell. The reference point of the moving cell is a location in the moving cell. The first distance is used to determine a relationship between a location of the terminal device and a coverage area of the moving cell.

With reference to the third aspect, in some implementations of the third aspect, the timestamp information indicates a start moment of the reference point of the moving cell, and the first information further includes at least one of the following:
first indication information, the reference point of the moving cell, a validity period of the reference point of the moving cell, and a location relationship between the moving cell and the second network device. The first indication information indicates that the cell in which the terminal device is located is the moving cell. The validity period of the reference point of the moving cell indicates a time range in which the reference point is available for the terminal device from the start moment. The location relationship between the moving cell and the second network device is used to determine a location of the reference point of the moving cell.

With reference to the third aspect, in some implementations of the third aspect, the timestamp information is any one of the following: an absolute moment of the reference point of the moving cell, an offset value of a start moment of ephemeris information of the second network device, and a start moment of a downlink subframe corresponding to a system frame number and a subframe number in the first information. The ephemeris information of the second network device indicates location information of the second network device.

With reference to the third aspect, in some implementations of the third aspect, the reference point of the moving cell is a central location of the moving cell.

With reference to the third aspect, in some implementations of the third aspect, the location relationship between the moving cell and the second network device includes a distance relationship between the reference point of the moving cell and a sub-satellite point of the second network device and an angle relationship between the reference point of the moving cell and the sub-satellite point of the second network device, or the location relationship between the moving cell and the second network device includes an angle relationship between the reference point of the moving cell and the second network device and an angle relationship between an origin of coordinates and the reference point of the moving cell.

With reference to the third aspect, in some implementations of the third aspect, the processing unit is further configured to determine, based on the first information, that the cell in which the terminal device is located is the moving cell. The processing unit is further configured to determine a second distance. When the first information includes the first distance, the processing unit is further configured to determine, based on the first distance and the second distance, whether to perform neighboring cell measurement. The second distance is a distance between a first location and a second location. The first location is a location of the terminal device at a first moment. The second location is a location of the reference point of the moving cell at the first moment.

With reference to the third aspect, in some implementations of the third aspect, the processing unit is further configured to determine the first location. The processing unit is further configured to determine a third location based on the ephemeris information of the second network device. The third location is a location of the second network device at the first moment. The terminal device determines the second location based on the third location. The processing unit is further configured to determine the second distance based on the first location and the second location.

With reference to the third aspect, in some implementations of the third aspect, when the first information includes the location relationship between the moving cell and the second network device, the processing unit is further configured to determine the second location based on the third location and the location relationship between the moving cell and the second network device; or when the first information includes the timestamp information, and the first information does not include the location relationship between the moving cell and the second network device, the processing unit is further configured to determine the location relationship between the moving cell and the second network device based on the timestamp information, a location of the second network device at a current moment, and a location of the reference point of the moving cell at the current moment; and the processing unit is further configured to determine the second location based on the third location and the location relationship between the moving cell and the second network device.

With reference to the third aspect, in some implementations of the third aspect, the processing unit is further configured to determine a service stop moment of the moving cell based on the first distance and the second distance. The processing unit is further configured to perform neighboring cell measurement before the service stop moment of the moving cell.

With reference to the third aspect, in some implementations of the third aspect, when the second distance is greater than the first distance, the processing unit is further configured to determine that the first moment is the service stop moment of the moving cell.

With reference to the third aspect, in some implementations of the third aspect, when the second distance is less than the first distance, the processing unit is further configured to determine a third distance. The third distance is a distance between a fourth location and a fifth location. The fourth location is a location of the terminal device at a second moment. The fifth location is a location of the reference point of the moving cell at the second moment, and the first moment is before the second moment. When the third distance is greater than the first distance, the processing unit is further configured to determine that the second moment is the service stop moment of the moving cell.

With reference to the third aspect, in some implementations of the third aspect, when the first information includes the first distance, the processing unit is further configured to determine, based on the first distance and the second distance, whether the terminal device is located at an edge of the moving cell. When the terminal device is located at the edge of the moving cell, the processing unit is further configured to perform neighboring cell measurement.

With reference to the third aspect, in some implementations of the third aspect, when the second distance is greater than the first distance, the processing unit is further configured to determine that the terminal device is at the edge of the moving cell at the first moment.

With reference to the third aspect, in some implementations of the third aspect, when the second distance is less than the first distance, the processing unit is further configured to skip performing neighboring cell measurement at the first moment. The processing unit is further configured to determine a third distance. The third distance is a distance between a fourth location and a fifth location. The fourth location is a location of the terminal device at a second moment. The fifth location is a location of the reference point of the moving cell at the second moment, and the first moment is before the second moment. When the third distance is greater than the first distance, the processing unit is further configured to determine that the terminal device is located at the edge of the moving cell at the second moment.

With reference to the third aspect, in some implementations of the third aspect, the processing unit is further configured to determine the fourth location. The processing unit is further configured to determine a sixth location based on the ephemeris information of the second network device. The sixth location is a location of the second network device at the second moment. The terminal device determines the fifth location based on the sixth location. The processing unit is further configured to determine the third distance based on the fourth location and the fifth location.

With reference to the third aspect, in some implementations of the third aspect, when the first information includes the location relationship between the moving cell and the second network device, the processing unit is further configured to determine the fifth location based on the sixth location and the location relationship between the moving cell and the second network device; or when the first information includes the timestamp information, and the first information does not include the location relationship between the moving cell and the second network device, the processing unit is further configured to determine the location relationship between the moving cell and the second network device based on a location of the second network device at a current moment, the timestamp information, and the location of the reference point of the moving cell. The processing unit is further configured to determine the fifth location based on the sixth location and the location relationship between the moving cell and the second network device.

With reference to the third aspect, in some implementations of the third aspect, when the first information includes the timestamp information, the processing unit is further configured to determine, based on the timestamp information, that the cell in which the terminal device is located is the moving cell; or when the first information includes the first indication information, the processing unit is further configured to determine, based on the first indication information, that the cell in which the terminal device is located is the moving cell; or when the first information includes the location relationship between the moving cell and the second network device, the processing unit is further configured to determine, based on the location relationship between the moving cell and the second network device, that the cell in which the terminal device is located is the moving cell.

With reference to the third aspect, in some implementations of the third aspect, the processing unit is further configured to obtain updated ephemeris information of the second network device before the ephemeris information of the second network device expires. The processing unit is further configured to re-determine the second distance.

With reference to the third aspect, in some implementations of the third aspect, the processing unit is further configured to determine the validity period of the reference point of the moving cell. The processing unit is further configured to update the reference point of the moving cell before the validity period of the reference point of the moving cell expires.

With reference to the third aspect, in some implementations of the third aspect, when the first information includes the validity period of the reference point of the moving cell, the processing unit is further configured to determine the validity period of the reference point of the moving cell; or when the first information does not include the validity period of the reference point of the moving cell, the processing unit is further configured to determine the validity period of the reference point of the moving cell based on a validity period of the ephemeris information of the second network device; or when the first information does not include the validity period of the reference point of the moving cell, the processing unit is further configured to determine a period when the terminal device is in the moving cell as the validity period of the reference point of the moving cell.

For explanations of related content and beneficial effects of the communication apparatus provided in the third aspect, refer to those of the method in the first aspect. Details are not described herein again.

According to a fourth aspect, a communication apparatus is provided, including a unit configured to perform the method according to the second aspect. The communication apparatus may be a first network device, or may be implemented by a chip or a circuit disposed in a first network device. This is not limited in this application.

The communication apparatus includes:
a processing unit, configured to determine first information, where the first information includes information about a moving cell in which a terminal device is located, the moving cell is a cell covered in a movement process of a second network device, and the second network device communicates with the first network device over a non-terrestrial network NTN; and a transceiver unit, configured to send the first information to the terminal device.

With reference to the fourth aspect, in some implementations of the fourth aspect, the first information includes timestamp information and/or a first distance. The timestamp information indicates time information of a reference point of the moving cell. The reference point of the moving cell is a location in the moving cell. The first distance is used to determine a relationship between a location of the terminal device and a coverage area of the moving cell.

With reference to the fourth aspect, in some implementations of the fourth aspect, the timestamp information indicates a start moment of the reference point of the moving cell, and the first information further includes at least one of the following:
first indication information, the reference point of the moving cell, a validity period of the reference point of the moving cell, and a location relationship between the moving cell and the second network device. The first indication information indicates that the cell in which the terminal device is located is the moving cell. The validity period of the reference point of the moving cell indicates a time range in which the reference point is available for the terminal device from the start moment. The location relationship between the moving cell and the second network device is used to determine a location of the reference point of the moving cell.

With reference to the fourth aspect, in some implementations of the fourth aspect, the timestamp information is any one of the following: an absolute moment of the reference point of the moving cell, an offset value of a start moment of ephemeris information of the second network device, and a start moment of a downlink subframe corresponding to a system frame number and a subframe number in the first information. The ephemeris information of the second network device indicates location information of the second network device.

With reference to the fourth aspect, in some implementations of the fourth aspect, the reference point of the moving cell is a central location of the moving cell.

With reference to the fourth aspect, in some implementations of the fourth aspect, the location relationship between the moving cell and the second network device includes a distance relationship between the reference point of the moving cell and a sub-satellite point of the second network device and an angle relationship between the reference point of the moving cell and the sub-satellite point of the second network device; or the location relationship between the moving cell and the second network device includes an angle relationship between the reference point of the moving cell and the second network device and an angle relationship between an origin of coordinates and the reference point of the moving cell.

For explanations of related content and beneficial effects of the communication apparatus provided in the fourth aspect, refer to those of the method in the second aspect. Details are not described herein again.

According to a fifth aspect, a communication apparatus is provided. The apparatus includes: a memory, configured to store programs; and at least one processor, configured to execute the computer programs or instructions stored in the memory, to perform the method according to any one of the possible implementations of the first aspect or the second aspect.

In an implementation, the apparatus is a terminal device.

In another implementation, the apparatus is a chip, a chip system, or a circuit used in the terminal device.

According to a sixth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores program code used to be executed by a device, and the program code includes the method according to any one of the possible implementations of the first aspect or the second aspect.

According to an eighth aspect, a computer program product that includes instructions is provided. When the computer program product runs on a computer, the computer is enabled to perform the method according to any one of the possible implementations of the first aspect or the second aspect.

According to a ninth aspect, a chip is provided. The chip includes a processor and a communication interface. The processor reads, through the communication interface, instructions stored in a memory, to perform the method according to any one of the possible implementations of the first aspect or the second aspect.

Optionally, in an implementation, the chip further includes a memory. The memory stores a computer program or instructions. The processor is configured to execute the computer program or the instructions stored in the memory, and when the computer program or the instructions are executed, the processor is configured to perform the method according to any one of the possible implementations of the first aspect or the second aspect.

According to a tenth aspect, a communication system is provided, including one or more of the foregoing terminal devices and first network devices.

### BRIEF DESCRIPTION OF DRAWINGS

FIG. 1 is diagram of a network architecture applicable to an embodiment of this application;
FIG. 2 is a diagram of an architecture of a communication system applicable to an embodiment of this application;
FIG. 3 is a diagram of a quasi-fixed cell;
FIG. 4 is a diagram of a moving cell;
FIG. 5 is a schematic flowchart of a communication method 500 according to an embodiment of this application;
FIG. 6 is a diagram of a location relationship between a moving cell and a second network device according to an embodiment of this application;
FIG. 7 is another diagram of a location relationship between a moving cell and a second network device according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a schematic block diagram of a communication apparatus 1000 according to an embodiment of this application.
FIG. 11 is a schematic block diagram of another communication apparatus 1100 according to an embodiment of this application; and
FIG. 12 is a diagram of a chip system 1200 according to an embodiment of this application.

### DESCRIPTION OF EMBODIMENTS

The following describes technical solutions in embodiments of this application with reference to the accompanying drawings.

The technical solutions in embodiments of this application may be applied to various communication systems, for example, a long term evolution (LTE) system, a long term evolution-advanced (LTE-A) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a next-generation communication system (for example, a fifth-generation (fifth-generation, 5G) communication system), a converged system of a plurality of access systems, an evolved system, three major application scenarios of a 5G mobile communication system: enhanced mobile bandwidth (enhanced Mobile Broadband, eMBB), ultra-reliable low-latency communication (ultra-reliable low-latency communication, URLLC), and enhanced machine type communication (enhanced Machine Type Communication, eMTC), or a new communication system emerging in the future. The technical solutions provided in this application may be further applied to a future communication system, for example, a sixth-generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

A network device in embodiments of this application may also be referred to as a (radio) access network (radio access network, (R)AN) device. The (R)AN can manage a radio resource, provide an access service for a user equipment, and complete forwarding of user equipment data between the user equipment and a core network. The (R)AN may also be understood as a base station in a network, and is an apparatus that is deployed in a radio access network to provide a wireless communication function for a mobile station (mobile station, MS).

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point. It may be understood that all or some functions of the access network device in this application may alternatively be implemented by using a software function running on hardware, or may be implemented by using a virtualization function instantiated on a platform (for example, a cloud platform).

In addition, in a network structure, the access network device may include a central unit (central unit, CU) node, a distributed unit (distributed unit, DU) node, or a RAN device including a CU node and a DU node. The RAN device including the CU node and the DU node splits protocol layers of a gNB in an NR system. Functions of some protocol layers are controlled by the CU in a centralized manner. Functions of some or all of remaining protocol layers are distributed in the DU, and the CU controls the DU in a centralized manner. The central unit CU may be further divided into a control plane (CU-CP) and a user plane (CU-UP). The CU-CP is responsible for a control plane function, and mainly includes an RRC layer and a PDCP layer corresponding to the control plane, namely, a PDCP-C layer. The PDCP-C layer is mainly responsible for data encryption and decryption, integrity protection, data transmission, and the like in the control plane. The CU-UP is responsible for a user plane function, and mainly includes an SDAP layer and a PDCP layer corresponding to the user plane, namely, a PDCP-U layer. The SDAP layer is mainly responsible for processing data of the core network and mapping a flow to a bearer. The PDCP-U layer is responsible for encryption and decryption, integrity protection, header compression, sequence number maintenance, data transmission, and the like in a data plane. The CU-CP and the CU-UP are connected through an E1 interface. On behalf of the gNB, the CU-CP is connected to the core network through an NG interface, and is connected to the DU through an F1 interface-control plane, namely, F1-C. The CU-UP is connected to the DU through an F1 interface-user plane, namely, F1-U. Certainly, in another possible implementation, the PDCP-C layer is alternatively in the CU-UP. The RAN device can be responsible for functions such as radio resource management, quality of service (quality of service, QoS) management, and data compression and encryption on an air interface side. The AN device provides an access service for the terminal device, to complete forwarding a control signal and user data between the terminal device and the core network.

The terminal device in embodiments of this application may also be referred to as a user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (a pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, a communication apparatus configured to implement a function of the network device may be a network device, may be a network device that has some functions of a base station, or may be an apparatus that can support the network device in implementing the function, for example, a chip system. The apparatus may be installed in the network device.

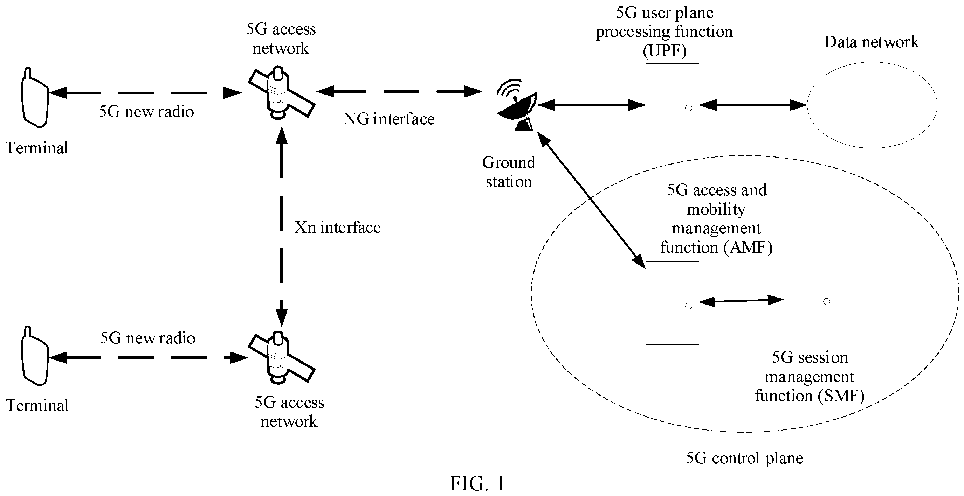

During actual network deployment, it is impossible for a terrestrial network to cover all areas, especially an area with a small quantity of people, for example, desert, ocean, or the north and south poles. A non-terrestrial network NTN network covers a wide area, and is easier to provide coverage in the area with the small quantity of people, and is suitable for deployment in the area with the small quantity of people. Embodiments of this application are applicable to non-terrestrial network NTN network communication. The NTN network is a network or a network segment that uses a radio frequency on a satellite (a UAS platform). The following uses a satellite communication system as an example to describe in detail a network architecture applicable to an embodiment of this application with reference to FIG. 1. **In** the satellite communication system, a network device may include a satellite.

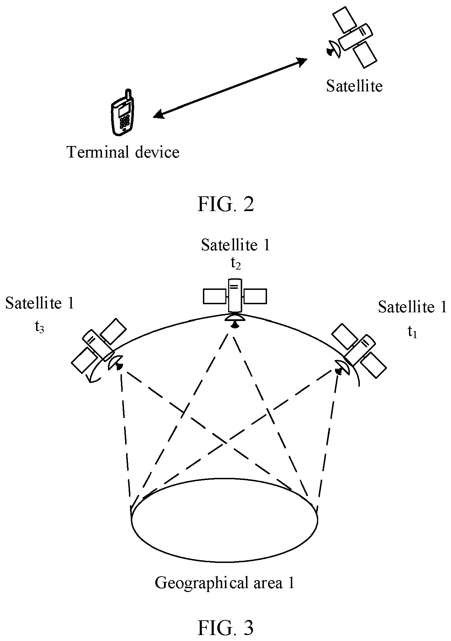

FIG. 1 is diagram of a network architecture applicable to an embodiment of this application. A terrestrial mobile terminal UE accesses a network through 5G new radio. A 5G access network device is deployed on a satellite, and is connected to a terrestrial core network through a radio link. **In** addition, there is a radio link between satellites, to implement signaling exchange and user data transmission between access network devices. All network elements in FIG. 2 and their interfaces are described as follows:
A terminal device is a mobile device that supports 5G new radio, for example, a mobile phone or a pad. The terminal device may access a satellite network through an air interface and initiate services such as a call and internet access.

The 5G access network device mainly provides a radio access service, schedules a radio resource for an access terminal, provides a reliable wireless transmission protocol and data encryption protocol, and the like, and is, for example, a base station.

A 5G core network provides services such as user access control, mobility management, session management, user security authentication, and accounting. The 5G core network includes a plurality of functional units, which can be classified into control-plane and data-plane functional entities. An access and mobility management function (AMF) is responsible for user access management, security authentication, and mobility management. A user plane function (UPF) is responsible for managing functions such as user plane data transmission and traffic statistics collection.

A terrestrial station is responsible for forwarding signaling and service data between a satellite access network device and the 5G core network.

The 5G new radio is a radio link between the terminal and the access network device.

An Xn interface is an interface between the 5G access network device and the access network device, and is mainly used for signaling exchange such as handover.

An NG interface is an interface between the 5G access network device and the 5G core network, and is mainly for exchanging signaling such as NAS signaling of the core network and service data of a user.

FIG. 2 is a diagram of an architecture of a communication system applicable to an embodiment of this application. As shown in FIG. 2, the communication system may include at least one network device like the satellite device shown in FIG. 1. The communication system may further include at least one terminal device like the terminal device shown in FIG. 1. The network device may communicate with the terminal device through a radio link.

It should be understood that the network device in a wireless communication system may be any device that has a wireless transceiver function. The device includes but is not limited to a base station controller (Base Station Controller, BSC), a base transceiver station (Base Transceiver Station, BTS), or the like, may be one antenna panel or a group of antenna panels (including a plurality of antenna panels) of a base station in a 5G system or the like, or may be a satellite or the like.

It should be understood that FIG. 2 shows only one network device and one terminal device. In an example, the communication system is not limited, and may include more terminal devices. For example, in a satellite communication network, the satellite may cover a plurality of terminal devices for communication. Each terminal device is not limited to communicating with one network device either. For example, after the satellite moves, the terminal device may reselect a satellite for access communication.

It may be understood that FIG. 2 is merely an example, and does not constitute any limitation on the protection scope of this application. A communication method provided in embodiments of this application may further relate to a network element or a device that is not shown in FIG. 2. Certainly, the communication method provided in embodiments of this application may alternatively include only some network elements shown in FIG. 2.

It should be understood that the network architecture shown above is merely an example for description, and a network architecture applicable to this embodiment of this application is not limited thereto. Any network architecture that can implement functions of the foregoing network elements is applicable to this embodiment of this application.

One or more services may be obtained through division into the network elements or the functions. Further, a service that is independent of a network function may occur. In this application, instances of the functions, instances of services included in the functions, or instances of the services that exist independently of network functions may be referred to as service instances.

It should be further understood that the foregoing names are defined merely for distinguishing between different functions, and should not constitute any limitation on this application. This application does not exclude a possibility of using other names in a 6G network and another future network.

It should be further understood that, names of interfaces between the network elements in FIG. 1 or FIG. 2 are merely examples. During specific implementation, the names of the interfaces may be other names. This is not specifically limited in this application. In addition, names of messages (or signaling) transmitted between the foregoing network elements are merely examples, and do not constitute any limitation on functions of the messages.

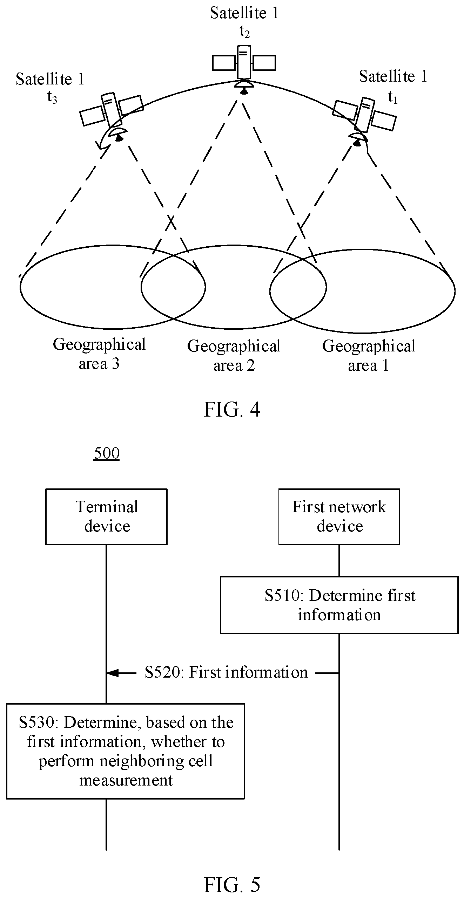

For ease of reading, the following describes or defines some technical terms or concepts in this application in a unified manner.
1. Non-terrestrial network (non-terrestrial network, NTN):
   The NTN is a network or a network segment that uses a radio frequency on a satellite (an unmanned aircraft system (UAS)). Satellite communication has advantages of a wide coverage area, a long communication distance, high reliability, high flexibility, and high throughput. A satellite is introduced into a 5th-generation (5th-Generation, 5G) mobile network, to provide communication services for areas that are difficult to be covered by a terrestrial network, for example, a sea and a forest. This can increase reliability of 5G communication, for example, provide more stable communication services with better quality for a train, an airplane, and users on such means of transportation, and can further provide more data transmission resources and support more connections.
2. Quasi-Earth-fixed cell:
   The quasi-Earth-fixed cell may also be referred to as a quasi-fixed cell for short. The quasi-fixed cell is a geographical area covered by a beam in a limited period, and the beam covers a different geographical area in another period (for example, in a case in which a non-geosynchronous orbit (Non-Geosynchronous orbit, NGSO) satellite generates a steerable beam). Specifically, as shown in FIG. 3, a geographical area covered by a steerable beam generated by a satellite 1 at moments t1, t2, and t3 is a geographical area 1. In other words, the geographical area 1 may be referred to as a quasi-fixed cell.
3. Earth-moving cell:
   The Earth-moving cell may also be referred to as a moving cell for short. The moving cell is an area covered by a beam. The moving cell moves on a surface of the Earth when a satellite moves (for example, in a case in which an NGSO satellite generates a fixed or non-steerable beam). Specifically, as shown in FIG. 4, geographical areas covered by a fixed or non-steerable beam generated by a satellite 1 at moments t1, t2, and t3 are respectively a geographical area 1, a geographical area 2, and a geographical area 3. In other words, the geographical area 1, the geographical area 2, and the geographical area 3 may all be referred to as moving cells.
4. NTN-based NG-RAN architecture (NTN-based NG-RAN architecture)

NTN-based NG-RAN architectures include an architecture with transparent satellite (RAN architecture with transparent satellite), a regenerative satellite without inter-satellite link-gNB processed payload (regenerative satellite without ISL, gNB processed payload), a regenerative satellite with inter-satellite link-gNB processed payload (regenerative satellite with ISL, gNB processed payload), an NG-RAN with a regenerative satellite based on gNB-DU (NG-RAN with a regenerative satellite based on gNB-DU), a gNB processed payload based on relay-like architectures (gNB processed payload based on relay-like architectures), and the like.

It should be noted that for specific descriptions of the NTN-based NG-RAN architectures, refer to descriptions in the conventional technology. To avoid repetition, details are not described herein in this application.

It should be noted that the several NTN-based NG-RAN architectures are merely examples, and there may be other architectures same as or similar to the NTN-based NG-RAN architectures. This is not limited in this application.

It should be noted that the foregoing terms or technologies all belong to the conventional technology, and are not limited.

It may be understood that the term "and/or" in this specification describes only an association relationship for associated objects and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes the terms in this application, and details are not described in the following embodiments again. The following describes in detail a communication method provided in embodiments of this application with reference to the accompanying drawings. Embodiments provided in this application may be applied to the network architectures shown in FIG. 1 and FIG. 2. This is not limited.

Based on the architectures shown in FIG. 1 and FIG. 2, when the terminal device is in a moving cell scenario, it is difficult for the terminal device to identify a cell edge based on cell signal strength and determine whether to perform cell reselection when the cell edge is reached. Consequently, neighboring cell measurement and reselection cannot be performed in a timely manner.

This application provides a communication method. A terminal device in a moving cell scenario can determine, in a timely manner, whether neighboring cell measurement and cell selection or reselection need to be performed, so that the terminal device can obtain paging of a wireless network in a timely manner, and the terminal device can initiate a call in a timely manner.

FIG. 5 is a diagram of a communication method 500 according to an embodiment of this application. The method 500 may include the following steps.

S510: A first network device determines first information.

The first information includes information about a moving cell in which a terminal device is located.

The moving cell is a cell covered in a movement process of a second network device. It should be understood that a geographical area covered by a fixed or non-steerable beam generated by the second network device is a moving cell. For example, as shown in FIG. 4, the satellite 1 is the second network device, and the geographical area 1, the geographical area 2, and the geographical area 3 are moving cells covered in a movement process of the second network device.

The second network device communicates with the first network device over an NTN.

For example, the first network device may be a base station, or may be a chip, a chip system, or a processor that supports a method that can be implemented by the first network device, or may be a logical module or software that can implement all or some functions of an access network device. This is not limited in this application.

For example, the second network device may be a device, for example, a satellite, an unmanned aircraft, or a high-altitude communication platform, that communicates with the first network device over the NTN. Alternatively, the second network device may be the same as the first network device. For example, the second network device may alternatively be a base station, or may be a logical module or software that can implement all or some functions of an access network device. This is not limited in this application.

For example, the first information includes timestamp information and/or a first distance. The timestamp information indicates time information of a reference point of the moving cell.

Optionally, the timestamp information may further indicate that the cell in which the terminal device is located is the moving cell.

Optionally, the timestamp information may further indicate a start moment of the reference point of the moving cell.

The reference point of the moving cell is a location in the moving cell. For example, the reference point of the moving cell may be a central location in the moving cell. This is not limited in this application.

Specifically, the timestamp information may be any one of the following:
an absolute moment of the reference point of the moving cell, an offset value of a start moment of ephemeris information of the second network device, and a start moment of a downlink subframe corresponding to a system frame number and a subframe number in the first information.

The absolute moment of the reference point of the moving cell is a moment of the reference point of the moving cell as from 00:00:00 on January 1, 1900 in the Gregorian calendar.

The offset value of the start moment of the ephemeris information of the second network device indicates a time difference between the absolute moment of the reference point of the moving cell and the start moment of the ephemeris information of the second network device.

It should be understood that the offset value may be 0. In other words, the absolute moment of the reference point of the moving cell is the same as the start moment of the ephemeris information of the second network device.

The ephemeris information of the second network device indicates location information of the second network device. For example, when the second network device is a satellite, the ephemeris information of the second network device indicates a moving track location of the satellite. This is not limited in this application.

The start moment of the downlink subframe corresponding to the system frame number and the subframe number in the first information indicates a moment for sending the first information.

Optionally, when the system frame number and the subframe number are default and the network device sends the first information through dedicated signaling, the start moment of the downlink subframe corresponding to the system frame number and the subframe number in the first information is the moment for sending the first information.

Optionally, when the system frame number and the subframe number are default and the network device sends the first information through broadcasting, the moment corresponding to the system frame number and the subframe number in the first information is an end moment of a system message window for scheduling the first information.

The first distance is used to determine a relationship between a location of the terminal device and a coverage area of the moving cell.

Optionally, when the first distance is a radius of the moving cell, the location relationship between the terminal device and the moving cell may be determined based on the first distance and the location of the terminal device.

Optionally, when the first distance is a distance value less than the radius of the moving cell, the location relationship between the terminal device and the moving cell may be determined based on the first distance and the location of the terminal device.

Optionally, the first information further includes at least one of the following:
first indication information, the reference point of the moving cell, a validity period of the reference point of the moving cell, a location relationship between the moving cell and the second network device, and the system frame number and the subframe number.

The first indication information indicates that the cell in which the terminal device is located is the moving cell.

The validity period of the reference point of the moving cell indicates a time range in which the reference point is available for the terminal device from the start moment of the reference point of the moving cell.

For example, the start moment of the reference point of the moving cell is 8:00 am, and the validity period of the reference point of the moving cell is 10 minutes. In other words, the validity period of the reference point of the moving cell is 8:00 am to 8:10 am.

The location relationship between the moving cell and the second network device is used to determine a location of the reference point of the moving cell.

Optionally, the timestamp information may further indicate that the cell in which the terminal device is located is the moving cell.

In a possible implementation, the location relationship between the moving cell and the second network device includes a distance relationship between the reference point of the moving cell and a sub-satellite point of the second network device and an angle relationship between the reference point of the moving cell and the sub-satellite point of the second network device.

The sub-satellite point of the second network device is an intersection point between a surface of the Earth and a connection line between an instantaneous location of the second network device and the center of the Earth, and the sub-satellite point of the second network device is represented by geographical longitude and latitude. In other words, a ground point directly below the second network device is the sub-satellite point.

For example, the location relationship between the moving cell and the second network device may be represented by (r, *θ*) or (rsin *θ*, rcos *θ*).

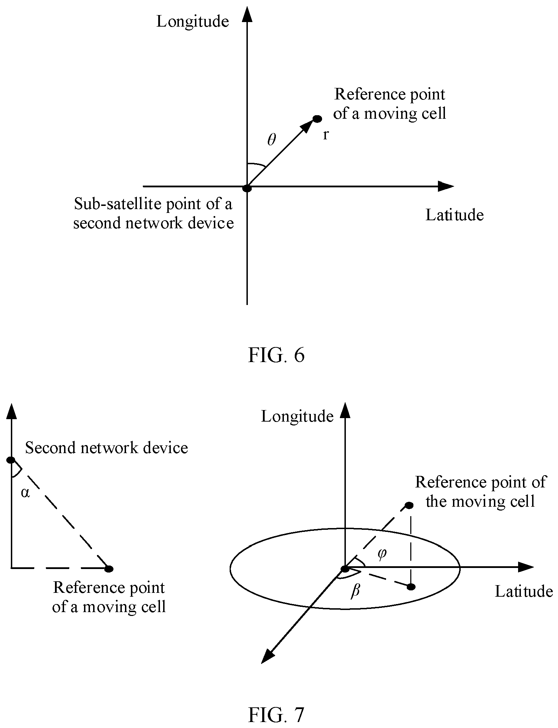

Herein, r represents a distance from the sub-satellite point of the second network device to the reference point of the moving cell at a moment, and *θ* represents an angle relationship between the sub-satellite point of the second network device and the reference point of the moving cell at the moment. For details, refer to FIG. 6.

In a possible implementation, the location relationship between the moving cell and the second network device includes an angle relationship between the reference point of the moving cell and the second network device and an angle relationship between an origin of coordinates and the reference point of the moving cell.

For example, the location relationship between the moving cell and the second network device may be represented by (α, *β*, *φ*)*.*

Herein, α represents information about an angle between the second network device and the reference point of the moving cell at a moment, and *β* and *φ* represent an angle relationship between the origin of coordinates (the geocenter) and the reference point of the moving cell at the moment. For details, refer to FIG. 7.

It should be noted that the location relationship between the moving cell and the second network device is merely an example. This is not limited in this application.

The system frame number and the subframe number are a system frame number and a subframe number corresponding to a subframe at any moment. This is not limited in this application.

S520: The first network device sends the first information to the terminal device.

Correspondingly, the terminal device receives the first information from the first network device.

In a possible implementation, the first network device sends the first information via a common message (for example, a broadcast message).

In a possible implementation, the first network device sends the first information via a dedicated message (for example, a paging message).

It should be noted that the manners of sending the first information to the terminal device by the first network device are merely examples. This is not limited in this application.

S530: The terminal device determines, based on the first information, whether to perform neighboring cell measurement.

It should be understood that after receiving the first information from the first network device, the terminal device determines, based on the first information, whether to perform neighboring cell measurement.

A neighboring cell is a neighboring cell of the moving cell.

Based on the foregoing solution, the terminal device in a moving cell scenario determines, in a timely manner based on the information that is sent by the first network device and that includes information about the moving cell in which the terminal device is located, whether neighboring cell measurement and cell selection or reselection need to be performed, so that the terminal device can obtain paging of a wireless network in a timely manner and initiate a call in a timely manner.

Further, that the terminal device determines, based on the first information, whether to perform neighboring cell measurement includes S531 to S534. The following separately describes S531 to S534 in detail.

S531: The terminal device determines, based on the first information, that the cell in which the terminal device is located is the moving cell.

In a possible implementation, when the first information includes the timestamp information, the terminal device determines, based on the timestamp information, that the cell in which the terminal device is located is the moving cell.

In a possible implementation, when the first information includes the first indication information, the terminal device determines, based on the first indication information, that the cell in which the terminal device is located is the moving cell.

In a possible implementation, the terminal device implicitly determines, based on other information (for example, the location relationship between the moving cell and the second network device) in the first information, that the cell in which the terminal device is located is the moving cell.

It should be noted that the manners of determining, by the terminal device based on the first information, that the cell in which the terminal device is located is the moving cell are merely examples. This is not limited in this application.

S532: The terminal device determines a second distance.

It should be understood that after determining that the cell in which the terminal device is currently located is the moving cell, the terminal device further determines a distance between the terminal device and the reference point of the moving cell, to determine the location relationship between the terminal device and the moving cell.

The second distance is a distance between a first location and a second location. The first location is a location of the terminal device at a first moment. The second location is a location of the reference point of the moving cell at the first moment.

The first moment is any moment after a current moment. This is not limited in this application.

Specifically, the terminal device first determines the first location and the second location, and further determines the second distance based on the first location and the second location.

Optionally, in S533, the terminal device determines the second location.

In a possible implementation, when the first information includes the location relationship between the moving cell and the second network device, the terminal device determines a third location based on the ephemeris information of the second network device, and the terminal device determines the second location based on the third location and the location relationship between the moving cell and the second network device.

The third location is a location of the second network device at the first moment.

In a possible implementation, when the first information includes the timestamp information, and the first information does not include the location relationship between the moving cell and the second network device, the terminal device determines the location relationship between the moving cell and the second network device based on the timestamp information, a location of the second network device at the current moment, and a location of the reference point of the moving cell at the current moment, and determines the third location based on the ephemeris information of the second network device. Further, the terminal device determines the second location based on the third location and the location relationship between the moving cell and the second network device.

It should be noted that the manners of determining the third location by the terminal device based on the ephemeris information of the second network device and determining the second location by the terminal device based on the third location are merely examples. This is not limited in this application.

Further, after the terminal device determines the second distance, the terminal device determines whether to perform neighboring cell measurement, and the method 500 may further include the following step.

S534: When the first information includes the first distance, the terminal device determines, based on the first distance and the second distance, whether to perform neighboring cell measurement.

In a possible implementation, the terminal device determines a service stop moment of the moving cell based on the first distance and the second distance, and performs neighboring cell measurement before the service stop moment of the moving cell.

It should be understood that, when a distance between a location of the terminal device at a moment and a location of the reference point of the moving cell at the moment is greater than the first distance, it is determined that the moment is the service stop moment of the moving cell, and the terminal device performs neighboring cell measurement before the service stop moment of the moving cell.

It should be understood that the service stop moment of the moving cell may be understood as follows: When the terminal device is out of the moving cell, the terminal device cannot receive a message sent by the moving cell and obtain a service provided by the moving cell.

For example, when the second distance is greater than the first distance, the terminal device determines that the first moment is the service stop moment of the moving cell.

For example, when the second distance is less than the first distance, the terminal device determines a third distance. The third distance is a distance between a fourth location and a fifth location. The fourth location is a location of the terminal device at a second moment. The fifth location is a location of the reference point of the moving cell at the second moment. The first moment is before the second moment. When the third distance is greater than the first distance, the terminal device determines that the second moment is the service stop moment of the moving cell.

The second moment is any moment after the first moment. This is not limited in this application.

In a possible implementation, the terminal device determines, based on the first distance and the second distance, whether the terminal device is at an edge of a moving cell. When the terminal device is at the edge of the moving cell, the terminal device performs neighboring cell measurement.

It should be understood that, when a distance between a location of the terminal device at a moment and a location of a reference point of the moving cell at the moment is greater than the first distance, it is determined that the terminal device is at the edge of the moving cell at the moment, and the terminal device performs neighboring cell measurement.

For example, when the second distance is greater than the first distance, the terminal device determines that the terminal device is located at the edge of the moving cell at the first moment, and the terminal device performs neighboring cell measurement.

For example, when the second distance is less than the first distance, the terminal device skips performing neighboring cell measurement at the first moment. Further, the terminal device determines the third distance. The third distance is the distance between the fourth location and the fifth location. The fourth location is the location of the terminal device at the second moment. The fifth location is the location of the reference point of the moving cell at the second moment. The first moment is before the second moment. When the third distance is greater than the first distance, the terminal device determines that the terminal device is located at the edge of the moving cell at the second moment, and the terminal device performs neighboring cell measurement.

Further, when the terminal device receives updated ephemeris information of the second network device, the terminal device needs to re-determine whether to perform neighboring cell measurement, and the method 300 may further include the following step.

Optionally, S540: When updating the ephemeris information of the second network device, the terminal device re-determines whether to perform neighboring cell measurement.

Specifically, the terminal device obtains the updated ephemeris information of the second network device before the ephemeris information of the second network device expires, and the terminal device re-determines whether to perform neighboring cell measurement, that is, performs S531 to S534 again.

It should be noted that, if the terminal device obtains the updated ephemeris information of the second network device within the validity period of the reference point of the moving cell, the terminal device does not need to re-determine whether to perform neighboring cell measurement.

Further, before the validity period of the reference point of the moving cell expires, the terminal device needs to update the reference point of the moving cell, and the method 300 may further include the following step.

Optionally, S550: The terminal device updates the reference point of the moving cell.

Specifically, the terminal device determines the validity period of the reference point of the moving cell, and the terminal device updates the reference point of the moving cell before the validity period of the reference point of the moving cell expires.

It should be noted that, after the terminal device updates the reference point of the moving cell, the terminal device needs to re-determine whether to perform neighboring cell measurement, that is, performs S531 to S534 again.

Specifically, the terminal device may determine the validity period of the reference point of the moving cell in the following manners.

In a possible implementation, when the first information includes a validity period of the reference point of the moving cell, the terminal device determines the validity period of the reference point of the moving cell in the first information as the validity period of the reference point of the moving cell.

In a possible implementation, when the first information does not include a validity period of the reference point of the moving cell, the terminal device determines a validity period of the ephemeris information of the second network device as the validity period of the reference point of the moving cell.

In a possible implementation, when the first information does not include a validity period of the reference point of the moving cell, the terminal device determines a period when the terminal device is in the moving cell as the validity period of the reference point of the moving cell.

It should be noted that the period when the terminal device is in the moving cell may be understood as a period before the terminal device leaves the moving cell. In other words, before the terminal device leaves the moving cell, the reference point of the moving cell is within the validity period of the reference point of the moving cell.

It should be noted that the manners of determining the validity period of the reference point of the moving cell by the terminal device are merely examples. This is not limited in this application.

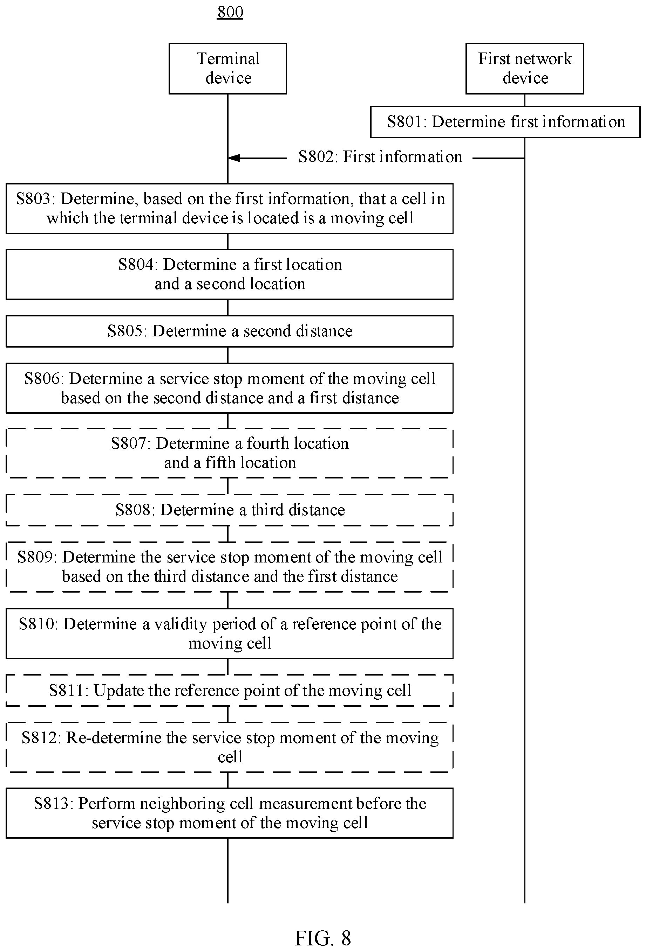

FIG. 8 is a diagram of a communication method 800 according to an embodiment of this application. The method 800 may include the following steps.

S801: A first network device determines first information.

The first information includes information about a moving cell in which a terminal device is located.

The moving cell is a cell covered in a movement process of a second network device.

It should be noted that a process of S801 is similar to a process of S510. To avoid repetition, detailed descriptions thereof are omitted herein.

S802: The first network device sends the first information to the terminal device.

Correspondingly, the terminal device receives the first information from the network device.

In a possible implementation, the first network device sends the first information via a common message (for example, a broadcast message).

In a possible implementation, the first network device sends the first information via a dedicated message (for example, a paging message).

It should be noted that the manners of sending the first information to the terminal device by the first network device are merely examples. This is not limited in this application.

S803: The terminal device determines, based on the first information, that the cell in which the terminal device is located is the moving cell.

It should be understood that, after the terminal device receives the first information, the terminal device determines, based on the first information, that the cell in which the terminal device is located is the moving cell.

It should be noted that a process of S803 is similar to a process of S531. To avoid repetition, detailed descriptions thereof are omitted herein.

Further, after determining that the cell in which the terminal device is currently located is the moving cell, the terminal device further determines a distance between the terminal device and a reference point of the moving cell at a first moment, to determine a location relationship between the terminal device and the moving cell, and the method 800 may further include the following steps.

S804: The terminal device determines a first location and a second location.

The first location is a location of the terminal device at the first moment, and the second location is a location of the reference point of the moving cell at the first moment.

The first moment is any moment after a current moment. This is not limited in this application.

Specifically, the terminal device determines the second location in the following manners.

In a possible implementation, when the first information includes the location relationship between the moving cell and the second network device, the terminal device determines a third location based on ephemeris information of the second network device, and the terminal device determines the second location based on the third location and the location relationship between the moving cell and the second network device.

The third location is a location of the second network device at the first moment.

In a possible implementation, when the first information includes timestamp information, and the first information does not include the location relationship between the moving cell and the second network device, the terminal device determines the location relationship between the moving cell and the second network device based on the timestamp information, a location of the second network device at the current moment, and a location of the reference point of the moving cell at the current moment, and determines the third location based on the ephemeris information of the second network device. Further, the terminal device determines the second location based on the third location and the location relationship between the moving cell and the second network device.

It should be noted that the manners of determining the second location by the terminal device are merely examples. This is not limited in this application.

S805: The terminal device determines a second distance.

Further, the terminal device determines the second distance based on the first location and the second location.

The second distance is a distance between the first location and the second location.

Further, after the terminal device determines the second distance, the terminal device determines a service stop moment of the moving cell based on the second distance, and the method 800 may further include the following step.

S806: The terminal device determines the service stop moment of the moving cell based on a first distance and the second distance.

Specifically, when the first information includes the first distance, the terminal device determines the service stop moment of the moving cell based on the first distance and the second distance.

It should be understood that, when a distance between a location of the terminal device at a moment and a location of the reference point of the moving cell at the moment, namely, the second distance, is greater than the first distance, it is determined that the moment is the service stop moment of the moving cell, and the terminal device performs neighboring cell measurement before the service stop moment of the moving cell.

In a possible implementation, when the second distance is greater than the first distance, the terminal device determines that the first moment is the service stop moment of the moving cell.

Optionally, when the second distance is less than the first distance, the terminal device further determines a third distance at the second moment, and determines a service stop moment of the moving cell based on the third distance and the first distance, and the method 800 may further include S807 to S809.

S807: The terminal device determines a fourth location and a fifth location.

The fourth location is a location of the terminal device at the second moment, and the fifth location is a location of a reference point of the moving cell at the second moment.

The second moment is any moment after the first moment. This is not limited in this application.

Specifically, the terminal device determines the fifth location in the following manners.

In a possible implementation, when the first information includes the location relationship between the moving cell and the second network device, the terminal device determines a sixth location based on the ephemeris information of the second network device, and the terminal device determines the fifth location based on the sixth location and the location relationship between the moving cell and the second network device.

The fifth location is a location of the second network device at the second moment.

In a possible implementation, when the first information includes the timestamp information, and the first information does not include the location relationship between the moving cell and the second network device, the terminal device determines the location relationship between the moving cell and the second network device based on the timestamp information, a location of the second network device at the current moment, and a location of the reference point of the moving cell at the current moment, and determines the sixth location based on the ephemeris information of the second network device. Further, the terminal device determines the fifth location based on the sixth location and the location relationship between the moving cell and the second network device.

It should be noted that the manners of determining the fifth location by the terminal device are merely examples. This is not limited in this application.

It should be noted that, for the manner of determining the fifth location by the terminal device, refer to the manner of determining the second location by the terminal device in S804. This is not limited in this application.

S808: The terminal device determines the third distance.

Further, the terminal device determines the third distance based on the fourth location and the fifth location.

The third distance is a distance between the fourth location and the fifth location.

S809: The terminal device determines the service stop moment of the moving cell based on the third distance and the first distance.

Specifically, when the third distance is greater than the first distance, the terminal device determines that the second moment is the service stop moment of the moving cell.

S810: The terminal device determines a validity period of the reference point of the moving cell.

In a possible implementation, when the first information includes a validity period of the reference point of the moving cell, the terminal device determines the validity period of the reference point of the moving cell in the first information as the validity period of the reference point of the moving cell.

In a possible implementation, when the first information does not include a validity period of the reference point of the moving cell, the terminal device determines a validity period of the ephemeris information of the second network device as the validity period of the reference point of the moving cell.

In a possible implementation, when the first information does not include a validity period of the reference point of the moving cell, the terminal device determines a period when the terminal device is in the moving cell as the validity period of the reference point of the moving cell.

It should be noted that the period when the terminal device is in the moving cell may be understood as a period before the terminal device leaves the moving cell. In other words, before the terminal device leaves the moving cell, the reference point of the moving cell is within the validity period of the reference point of the moving cell.

It should be noted that the manners of determining the validity period of the reference point of the moving cell by the terminal device are merely examples. This is not limited in this application.

Optionally, S811: The terminal device updates the reference point of the moving cell before the validity period of the reference point of the moving cell expires.

After updating the reference point of the moving cell, the terminal device re-determines the service stop moment of the moving cell, that is, performs S804 to S809 again.

Optionally, S812: When updating the ephemeris information of the second network device, the terminal device re-determines the service stop moment of the moving cell.

Specifically, when the ephemeris information of the second network device is updated, the first network device sends updated ephemeris information of the second network device to the terminal device through broadcasting or the like. After receiving the updated ephemeris information of the second network device, the terminal device re-determines the service stop moment of the moving cell, that is, performs S804 to S809 again.

It should be noted that, if the terminal device obtains the updated ephemeris information of the second network device within the validity period of the reference point of the moving cell, the terminal device does not need to re-determine the service stop moment of the moving cell.

S813: The terminal device performs neighboring cell measurement before the service stop moment of the moving cell.

A neighboring cell is a neighboring cell of the moving cell.

Specifically, after determining the service stop moment of the moving cell, the terminal device performs neighboring cell measurement before the service stop moment of the moving cell.

It should be understood that, that the terminal device performs neighboring cell measurement before the service stop moment of the moving cell may be that the terminal device performs neighboring cell measurement at any moment before the service stop moment of the moving cell.

It should be noted that, for a method for performing neighboring cell measurement by the terminal device, refer to the conventional technology. Detailed descriptions thereof are omitted in this application.

Based on the foregoing solution, the terminal device in a moving cell scenario determines, based on the information that is sent by the first network device and that includes information about the moving cell in which the terminal device is located, the service stop moment of the moving cell. In this way, the terminal device may perform neighboring cell measurement and cell selection or reselection in a timely manner before the service stop moment of the moving cell, so that the terminal device can obtain paging of a wireless network in a timely manner and initiate a call in a timely manner.

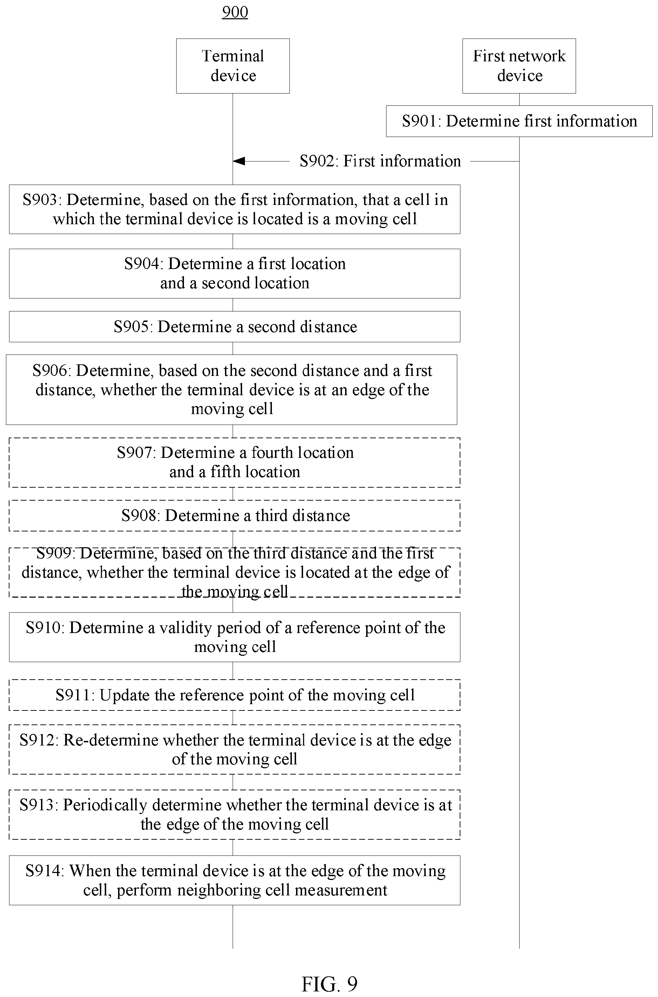

FIG. 9 is a diagram of a communication method 900 according to an embodiment of this application. The method 900 may include the following steps.

S901: A first network device determines first information.

The first information includes information about a moving cell in which a terminal device is located.

The moving cell is a cell covered in a movement process of a second network device.

It should be noted that a process of S901 is similar to a process of S510. To avoid repetition, detailed descriptions thereof are omitted herein.

S902: The first network device sends the first information to the terminal device.

Correspondingly, the terminal device receives the first information from the network device.

In a possible implementation, the first network device sends the first information via a common message (for example, a broadcast message).

In a possible implementation, the first network device sends the first information via a dedicated message (for example, a paging message).

It should be noted that the manners of sending the first information to the terminal device by the first network device are merely examples. This is not limited in this application.

S903: The terminal device determines, based on the first information, that the cell in which the terminal device is located is the moving cell.

It should be understood that, after the terminal device receives the first information, the terminal device determines, based on the first information, that the cell in which the terminal device is located is the moving cell.

It should be noted that a process of S903 is similar to a process of S531. To avoid repetition, detailed descriptions thereof are omitted herein.

Further, after determining that the cell in which the terminal device is currently located is the moving cell, the terminal device further determines a distance between the terminal device and a reference point of the moving cell at a first moment, to determine a location relationship between the terminal device and the moving cell, and the method 900 may further include the following steps.

S904: The terminal device determines a first location and a second location.

The first location is a location of the terminal device at the first moment, and the second location is a location of the reference point of the moving cell at the first moment.

It should be noted that a process of S904 is similar to a process of S804. To avoid repetition, detailed descriptions thereof are omitted herein.

S905: The terminal device determines a second distance.

Further, the terminal device determines the second distance based on the first location and the second location.

The second distance is a distance between the first location and the second location.

Further, after the terminal device determines the second distance, the terminal device determines a service stop moment of the moving cell based on the second distance, and the method 900 may further include the following step.

S906: The terminal device determines, based on a first distance and a second distance, whether the terminal device is located at an edge of the moving cell.

Specifically, when the first information includes the first distance, the terminal device determines, based on the first distance and the second distance, whether the terminal device is located at the edge of the moving cell.

It should be understood that, when a distance between a location of the terminal device at a moment and a location of the reference point of the moving cell at the moment, namely, the second distance, is greater than the first distance, it is determined that the terminal device is at the edge of the moving cell at the moment.

In a possible implementation, when the second distance is greater than the first distance, the terminal device determines that the terminal device is located at an edge of the moving cell at the first moment.

Optionally, when the second distance is less than the first distance, the terminal device further determines a third distance at a second moment, and determines, based on the third distance and the first distance, whether the terminal device is at the edge of the moving cell, and the method 900 may further include S907 to S909.

S907: The terminal device determines a fourth location and a fifth location.

The fourth location is a location of the terminal device at the second moment. The fifth location is a location of the reference point of the moving cell at the second moment. The first moment is before the second moment.

It should be noted that a process of S907 is similar to a process of S808. To avoid repetition, detailed descriptions thereof are omitted herein.

S908: The terminal device determines the third distance.

Further, the terminal device determines the third distance based on the fourth location and the fifth location.

The third distance is a distance between the fourth location and the fifth location.

S909: The terminal device determines, based on the third distance and the first distance, whether the terminal device is located at the edge of the moving cell.

Specifically, when the third distance is greater than the first distance, the terminal device determines that the terminal device is located at the edge of the moving cell at the second moment.

S910: The terminal device determines a validity period of the reference point of the moving cell.

It should be noted that a process of S910 is similar to a process of S810. To avoid repetition, detailed descriptions thereof are omitted herein.

Optionally, S911: The terminal device updates the reference point of the moving cell before the validity period of the reference point of the moving cell expires.

After updating the reference point of the moving cell, the terminal device re-determines whether the terminal device is located at the edge of the moving cell, that is, performs S904 to S909 again.

Optionally, S912: When updating the ephemeris information of the second network device, the terminal device re-determines whether the terminal device is located at the edge of the moving cell.

Specifically, when the ephemeris information of the second network device is updated, the first network device sends updated ephemeris information of the second network device to the terminal device through broadcasting or the like. After receiving the updated ephemeris information of the second network device, the terminal device re-determines whether the terminal device is at the edge of a moving cell, that is, performs S904 to S909 again.

It should be noted that, if the terminal device obtains the updated ephemeris information of the second network device within the validity period of the reference point of the moving cell, the terminal device does not need to re-determine whether the terminal device is at the edge of the moving cell.

Optionally, S913: The terminal device periodically determines whether the terminal device is located at the edge of the moving cell.

Periodicity parameter information may be sent by the network device to the terminal device. This is not limited in this application.

Specifically, after receiving the periodicity parameter information, the terminal device periodically determines, based on the periodicity parameter information, whether the terminal device is located at the edge of the moving cell.

S914: When the terminal device is located at the edge of the moving cell, the terminal device performs neighboring cell measurement.

A neighboring cell is a neighboring cell of the moving cell.

Specifically, after the terminal device determines that the terminal device is currently at the edge of the moving cell, the terminal device performs neighboring cell measurement.

It should be noted that, for a method for performing neighboring cell measurement by the terminal device, refer to the conventional technology. Detailed descriptions thereof are omitted in this application.

Based on the foregoing solution, the terminal device in a moving cell scenario determines, based on the information that is sent by the first network device and that includes information about the moving cell in which the terminal device is located, whether the terminal device is located at the edge of the moving cell. In this way, when the terminal device is located at the edge of the moving cell, the terminal device may perform neighboring cell measurement and cell selection or reselection in a timely manner, so that paging of a wireless network can be obtained in a timely manner and a call can be initiated in a timely manner. This avoids a paging failure.

It may be understood that the examples in FIG. 5 to FIG. 9 in embodiments of this application are merely intended to help a person skilled in the art understand embodiments of this application, but are not intended to limit embodiments of this application to specific scenarios in the examples. It is clear that a person skilled in the art can make various equivalent modifications or changes to the examples in FIG. 5 to FIG. 9, and such modifications or variations also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names such as the first information are used in embodiments of this application. It should be understood that the names do not limit the protection scope of embodiments of this application.

It may be further understood that, in the foregoing method embodiments, the methods and operations implemented by the terminal device may alternatively be implemented by a component (for example, a chip or a circuit) of the terminal device. In addition, the methods and the operations implemented by the first network device may alternatively be implemented by a component (for example, a chip or a circuit) of the first network device. This is not limited. Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

It should be understood that the first network device and the terminal device may perform some or all steps in the foregoing embodiments. These steps or operations are merely examples. In embodiments of this application, other operations or variations of various operations may be further performed. In addition, the steps may be performed in another order different from that presented in the foregoing embodiments, and not all the operations in the foregoing embodiments may be performed.

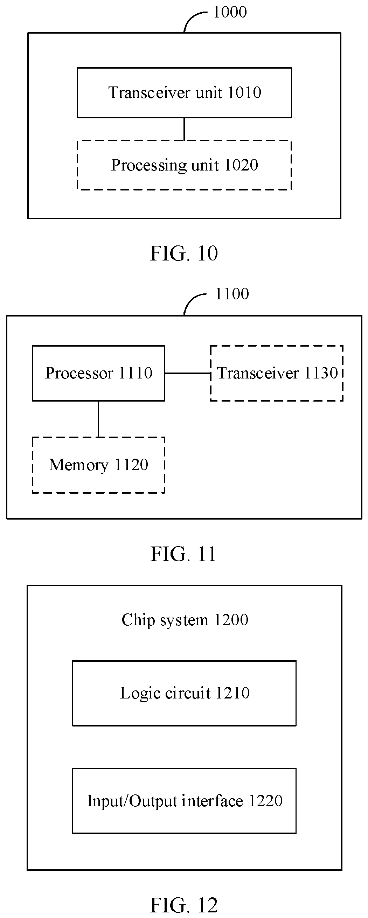

The foregoing describes in detail the communication method provided in embodiments of this application with reference to FIG. 5 to FIG. 9. The following describes in detail the communication apparatus provided in embodiments of this application with reference to FIG. 10 to FIG. 12. It should be understood that descriptions of the apparatus embodiments correspond to descriptions of the method embodiments. Therefore, for content that is not described in detail, refer to the foregoing method embodiments. For brevity, some content is not described herein again.

FIG. 10 is a block diagram of a communication apparatus according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 may further include a processing unit 1020. The processing unit 1020 may be configured to process data.

Optionally, the apparatus 1000 further includes a storage unit. The storage unit may be configured to store instructions and/or data. The processing unit 1020 may read the instructions and/or the data in the storage unit, so that the apparatus implements actions of different terminal devices in the foregoing method embodiments, for example, actions of the first network device or the terminal device.

The apparatus 1000 may be configured to perform the actions performed by the first network device or the terminal device in the foregoing method embodiments. In this case, the apparatus 1000 may be the first network device or the terminal device, or may be a component of the first network device or the terminal device. The transceiver unit 1010 is configured to perform a receiving/sending-related operation of the first network device or the terminal device in the foregoing method embodiments. The processing unit 1020 is configured to perform a processing-related operation of the first network device or the terminal device in the foregoing method embodiments.

It should be further understood that the apparatus 1000 is presented in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the first network device or the terminal device in the foregoing embodiments, and may be configured to perform procedures and/or steps corresponding to the first network device or the terminal device in the foregoing method embodiments. To avoid repetition, details are not described herein again.

The apparatus 1000 in the foregoing solutions has a function of implementing corresponding steps performed by the first network device or the terminal device in the foregoing methods, or the apparatus 1000 in the foregoing solutions has a function of implementing corresponding steps performed by the first network device or the terminal device in the foregoing methods. The function may be implemented by hardware, or may be implemented by executing corresponding software by hardware. The hardware or software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, to separately perform sending and receiving operations and a related processing operation in the method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus in FIG. 10 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

As shown in FIG. 11, an embodiment of this application provides another communication apparatus 1100. The apparatus 1100 includes a processor 1110. The processor 1110 is coupled to a memory 1120. The memory 1120 is configured to store a computer program or instructions and/or data. The processor 1110 is configured to execute the computer program or the instructions stored in the memory 1120 or read the data stored in the memory 1120 to perform the methods in the foregoing method embodiments.

Optionally, there are one or more processors 1110.

Optionally, there are one or more memories 1120.

Optionally, the memory 1120 and the processor 1110 are integrated together or separately disposed.

Optionally, as shown in FIG. 11, the apparatus 1100 further includes a transceiver 1130. The transceiver 1130 is configured to receive and/or send a signal. For example, the processor 1110 is configured to control the transceiver 1130 to receive and/or send the signal.

In a solution, the apparatus 1100 is configured to implement operations performed by the first network device or the terminal device in the foregoing method embodiments.

For example, the processor 1110 is configured to execute the computer program or the instructions stored in the memory 1120, to implement related operations of the first network device in the foregoing method embodiments, for example, the method implemented by the first network device in any one of the embodiments shown in FIG. 5 to FIG. 9, or the method implemented by the first network device in any one of the embodiments shown in FIG. 5 to FIG. 9.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random-access memory, RAM). For example, the RAM may be used as an external cache. By way of example rather than limitation, the RAM includes a plurality of forms as follows: a static random-access memory (static RAM, SRAM), a dynamic random-access memory (dynamic RAM, DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchlink dynamic random-access memory (synchlink DRAM, SLDRAM), and a direct rambus random-access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

As shown in FIG. 12, an embodiment of this application provides a chip system 1200. The chip system 1200 (or may also be referred to as a processing system) includes a logic circuit 1210 and an input/output interface (input/output interface) 1220.

The logic circuit 1210 may be a processing circuit in the chip system 1200. The logic circuit 1210 may be coupled to and connected to a storage unit, and invoke instructions in the storage unit for the chip system 1200 to implement the methods and functions in embodiments of this application. The input/output interface 1220 may be an input/output circuit in the chip system 1200, and outputs information processed by the chip system 1200, or inputs to-be-processed data or signaling information to the chip system 1200 for processing.

In a solution, the chip system 1200 is configured to implement operations performed by the first network device or the terminal device in the foregoing method embodiments.

For example, the logic circuit 1210 is configured to implement a processing-related operation of the first network device in the foregoing method embodiments, for example, a processing-related operation of the first network device in any one of the embodiments shown in FIG. 5 to FIG. 9. The input/output interface 1220 is configured to implement a sending and/or receiving-related operation of the first network device in the foregoing method embodiments, for example, a sending and/or receiving-related operation of the first network device in any one of the embodiments shown in FIG. 5 to FIG. 9.

An embodiment of this application further provides a computer-readable storage medium. The computer-readable storage medium stores computer instructions used to implement the method performed by the first network device or the terminal device in the foregoing method embodiments.

For example, when the computer program is executed by a computer, the computer is enabled to implement the method performed by the first network device or the terminal device in the foregoing method embodiments.

An embodiment of this application further provides a computer program product, including instructions. The instructions are executed by a computer to implement the method performed by the first network device or the terminal device in the foregoing method embodiments.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. For example, the usable medium may include but is not limited to any medium that can store program code, such as a USB flash drive, a removable hard disk drive, a read-only memory (read-only memory, ROM), a random-access memory (random-access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first information from a first network device, wherein the first information comprises information about a moving cell in which the terminal device is located, the moving cell is a cell covered in a movement process of a second network device, and the second network device communicates with the first network device over a non-terrestrial network NTN; and
determining, by the terminal device based on the first information, whether to perform neighboring cell measurement, wherein a neighboring cell is a neighboring cell of the moving cell.

2. The method according to claim 1, wherein the first information comprises timestamp information and/or a first distance; and
the timestamp information indicates time information of a reference point of the moving cell, the reference point of the moving cell is a location in the moving cell, and the first distance is used to determine a relationship between a location of the terminal device and a coverage area of the moving cell.

3. The method according to claim 2, wherein the timestamp information indicates a start moment of the reference point of the moving cell, and the first information further comprises at least one of the following:
first indication information, the reference point of the moving cell, a validity period of the reference point of the moving cell, and a location relationship between the moving cell and the second network device, wherein
the first indication information indicates that the cell in which the terminal device is located is the moving cell, the validity period of the reference point of the moving cell indicates a time range in which the reference point is available for the terminal device from the start moment, and the location relationship between the moving cell and the second network device is used to determine a location of the reference point of the moving cell.

4. The method according to claim 2 or 3, wherein the timestamp information is any one of the following:
an absolute moment of the reference point of the moving cell, an offset value of a start moment of ephemeris information of the second network device, and a start moment of a downlink subframe corresponding to a system frame number and a subframe number in the first information, wherein
the ephemeris information of the second network device indicates location information of the second network device.

5. The method according to claim 3 or 4, wherein the location relationship between the moving cell and the second network device comprises a distance relationship between the reference point of the moving cell and a sub-satellite point of the second network device and an angle relationship between the reference point of the moving cell and the sub-satellite point of the second network device; or
the location relationship between the moving cell and the second network device comprises an angle relationship between the reference point of the moving cell and the second network device and an angle relationship between an origin of coordinates and the reference point of the moving cell.

6. The method according to any one of claims 2 to 5, wherein the determining, by the terminal device based on the first information, whether to perform neighboring cell measurement comprises:
determining, by the terminal device based on the first information, that the cell in which the terminal device is located is the moving cell;
determining, by the terminal device, a second distance; and
when the first information comprises the first distance, determining, by the terminal device based on the first distance and the second distance, whether to perform neighboring cell measurement, wherein
the second distance is a distance between a first location and a second location, the first location is a location of the terminal device at a first moment, and the second location is a location of the reference point of the moving cell at the first moment.

7. The method according to claim 6, wherein the determining, by the terminal device, a second distance comprises:
determining, by the terminal device, the first location;
determining, by the terminal device, a third location based on the ephemeris information of the second network device, wherein the third location is a location of the second network device at the first moment;
determining, by the terminal device, the second location based on the third location; and
determining, by the terminal device, the second distance based on the first location and the second location.

8. The method according to claim 7, wherein the determining, by the terminal device, the second location based on the third location comprises:
when the first information comprises the location relationship between the moving cell and the second network device, determining, by the terminal device, the second location based on the third location and the location relationship between the moving cell and the second network device; or
when the first information comprises the timestamp information, and the first information does not comprise the location relationship between the moving cell and the second network device,
determining, by the terminal device, the location relationship between the moving cell and the second network device based on the timestamp information, a location of the second network device at a current moment, and a location of the reference point of the moving cell at the current moment; and
determining, by the terminal device, the second location based on the third location and the location relationship between the moving cell and the second network device.

9. The method according to any one of claims 6 to 8, wherein when the first information comprises the first distance, the determining, by the terminal device based on the first distance and the second distance, whether to perform neighboring cell measurement comprises:
determining, by the terminal device, a service stop moment of the moving cell based on the first distance and the second distance; and
performing, by the terminal device, neighboring cell measurement before the service stop moment of the moving cell.

10. The method according to claim 9, wherein the determining, by the terminal device, a service stop moment of the moving cell based on the first distance and the second distance comprises:
when the second distance is greater than the first distance, determining, by the terminal device, that the first moment is the service stop moment of the moving cell.

11. The method according to claim 10, wherein when the second distance is less than the first distance, the method further comprises:
determining, by the terminal device, a third distance, wherein the third distance is a distance between a fourth location and a fifth location, the fourth location is a location of the terminal device at a second moment, the fifth location is a location of the reference point of the moving cell at the second moment, and the first moment is before the second moment; and
when the third distance is greater than the first distance, determining, by the terminal device, that the second moment is the service stop moment of the moving cell.

12. The method according to any one of claims 6 to 8, wherein when the first information comprises the first distance, the determining, by the terminal device based on the first distance and the second distance, whether to perform neighboring cell measurement comprises:
determining, by the terminal device based on the first distance and the second distance, whether the terminal device is located at an edge of the moving cell; and
when the terminal device is located at the edge of the moving cell, performing, by the terminal device, neighboring cell measurement.

13. The method according to claim 12, wherein the determining, by the terminal device based on the first distance and the second distance, whether the terminal device is located at an edge of the moving cell comprises:
when the second distance is greater than the first distance, determining, by the terminal device, that the terminal device is located at the edge of the moving cell at the first moment.

14. The method according to claim 12, wherein the determining, by the terminal device based on the first distance and the second distance, whether the terminal device is located at an edge of the moving cell comprises:
when the second distance is less than the first distance, skipping, by the terminal device, performing neighboring cell measurement at the first moment;
determining, by the terminal device, a third distance, wherein the third distance is a distance between a fourth location and a fifth location, the fourth location is a location of the terminal device at a second moment, the fifth location is a location of the reference point of the moving cell at the second moment, and the first moment is before the second moment; and
when the third distance is greater than the first distance, determining, by the terminal device, that the terminal device is located at the edge of the moving cell at the second moment.

15. The method according to any one of claims 6 to 14, wherein the determining, by the terminal device based on the first information, that the cell in which the terminal device is located is the moving cell comprises:
when the first information comprises the timestamp information, determining, by the terminal device based on the timestamp information, that the cell in which the terminal device is located is the moving cell; or
when the first information comprises the first indication information, determining, by the terminal device based on the first indication information, that the cell in which the terminal device is located is the moving cell; or
when the first information comprises the location relationship between the moving cell and the second network device, determining, by the terminal device based on the location relationship between the moving cell and the second network device, that the cell in which the terminal device is located is the moving cell.

16. The method according to any one of claims 6 to 15, wherein the method further comprises:
obtaining, by the terminal device, updated ephemeris information of the second network device before the ephemeris information of the second network device expires; and
re-determining, by the terminal device, the second distance.

17. The method according to any one of claims 2 to 16, wherein the method further comprises:
determining, by the terminal device, the validity period of the reference point of the moving cell; and
updating, by the terminal device, the reference point of the moving cell before the validity period of the reference point of the moving cell expires.

18. The method according to claim 17, wherein the determining, by the terminal device, the validity period of the reference point of the moving cell comprises:
when the first information comprises the validity period of the reference point of the moving cell, determining, by the terminal device, the validity period of the reference point of the moving cell; or
when the first information does not comprise the validity period of the reference point of the moving cell, determining, by the terminal device, the validity period of the reference point of the moving cell based on a validity period of the ephemeris information of the second network device; or
when the first information does not comprise the validity period of the reference point of the moving cell, determining, by the terminal device, a period when the terminal device is in the moving cell as the validity period of the reference point of the moving cell.

19. A communication method, comprising:
determining, by a first network device, first information, wherein the first information comprises information about a moving cell in which a terminal device is located, the moving cell is a cell covered in a movement process of a second network device, and the second network device communicates with the first network device over a non-terrestrial network NTN; and
sending, by the first network device, the first information to the terminal device.

20. The method according to claim 19, wherein the first information comprises timestamp information and/or a first distance; and
the timestamp information indicates time information of a reference point of the moving cell, the reference point of the moving cell is a location in the moving cell, and the first distance is used to determine a relationship between a location of the terminal device and a coverage area of the moving cell.

21. A communication apparatus, comprising:
a processor, configured to execute a computer program stored in a memory, for the communication apparatus to perform the method according to any one of claims 1 to 20.

22. A computer-readable storage medium, wherein the computer-readable storage medium stores a computer program or instructions, and when the computer program or the instructions are executed by a processor, the method according to any one of claims 1 to 20 is performed.

23. A computer program product comprising instructions, wherein when the instructions are run on a computer, the method according to any one of claims 1 to 20 is performed.

24. A chip system, comprising a processor, configured to invoke a computer program or instructions from a memory and run the computer program or the instructions, for a communication apparatus on which the chip system is installed to implement the method according to any one of claims 1 to 20.
